# EUROPÄISCHE PATENTSCHRIFT

(11) **EP 2 127 002 B1**
(45) Veröffentlichungstag und Bekanntmachung des Hinweises auf die Patenterteilung: **28.03.2012**
(21) Anmeldenummer: 08716048.7
(22) Anmeldetag: 26.02.2008
(51) Int. Cl.: H01M 2/10

(54) **BLEIAKKUMULATOR UND GRIFFANORDNUNG HIERFÜR**
LEAD STORAGE BATTERY AND GRIP ARRANGEMENT THEREOF
BATTERIE AU PLOMB ET ENSEMBLE POIGNÉE POUR CETTE BATTERIE

(30) Priorität: 27.02.2007 DE 102007009770
(43) Veröffentlichungstag der Anmeldung: 02.12.2009
(73) Patentinhaber: VB Autobatterie GmbH & Co. KGaA, 30419 Hannover (DE)
(72) Erfinder: STREUER, Peter, 30559 Hannover (DE); SCHULZE-BECKINGHAUSEN, Andreas, 31515 Wunstorf (DE)
(74) Vertreter: Günther, Constantin
(86) Internationale Anmeldenummer: PCT/EP2008/001509
(87) Internationale Veröffentlichungsnummer: WO 2008/104364

(56) Entgegenhaltungen:
- EP-A- 0 355 854
- WO-A-01/41236
- DE-U1- 8 535 535
- DE-U1- 8 805 405
- US-A- 5 144 719

## Beschreibung

Die Erfindung betrifft eine Griffanordnung für Batteriekästen mit einem Griffelement, das mit mindestens einem Ende einer am Batteriekasten befestigbaren Schnur so verbindbar ist, dass ein mit einem Endstück versehenes Ende der Schnur durch einen mit einem verjüngten Abschnitt versehenen, seitlich offenen und mit seiner Durchgangsachse quer zur Längsachse des Griffelementes ausgerichteten Schnurdurchgangs im Griffelement geführt und das Endstück in einer Arretierungskammer gehalten wird.

Die Erfindung betrifft weiterhin einen Bleiakkumulator mit einem Batteriekasten und zwei Griffanordnungen an sich gegenüberliegenden Seitenwänden des Batteriekastens.

FR 2 556 136 A1 offenbart eine Batteriekastenschnur, die an einem Ende ein Endstück und am anderen Ende ein Verriegelungselement aufweist. Das Verriegelungselement hat eine zum Einlegen des Endstücks ausreichend große Öffnung, an der ein Schlitz zum Einlegen der Batterieschnur sowie eine Arretierungskammer für das Endstück angrenzt. Zum Verschließen der Batteriekastenschnur wird das Endstück in die Öffnung und die angrenzende Batterieschnur in den Schlitz eingelegt und durch Ziehen der Batterieschnur das Endstück in die Arretierungskammer verlagert und dort festgelegt. Die Schnurrichtung der Batterieschnur des Endstücks in der Verriegelungskammer ist gleich bleibend.

Eine ähnliche Batteriekastenschnur für ein Akkumulatorgehäuse mit eingeformter Griffleiste ist in der DE 75 38 942 U1 beschrieben. Auch hier wird das Endstück an der Batteriekastenschnur in einem Verschlussstück festgelegt.

FR 2 565 411 A1 offenbart eine Batteriekastenschnur mit einem Verschluss bestückt, bei dem das Endstück der Batteriekastenschnur quer zur Erstreckungsrichtung des Verschlussstücks und der daran angebrachten Kordel durch eine Bohrung geführt und in eine benachbarte Bohrung angeordnete Arretierungskammer eingelegt wird. Zwischen Bohrung und Arretierungskammer ist ein Schlitz vorgesehen. Die Kordel wird von der Bohrung durch den Schlitz zur Arretierungskammer um 90 ° umgelenkt und dadurch weiter gesichert.

Eine entsprechende Ausführungsform einer Batteriekastenschnur ist auch in der DE 29 50 629 B1 offenbart.

DE 97 35 447 U beschreibt eine Starterbatterie mit einer an das Batteriegefäß angeformten Griffleiste. Die Griffleiste hat seitlich jeweils eine Bohrung zum Durchführen einer Kordel zum Tragen des Akkumulators. Angrenzend an die Bohrung ist jeweils eine elastisch verformbares, geschlitztes Loch zum Einknüpfen und Arretieren der Kordel vorgesehen. Ein mit der Kordel verbundenes Endstück liegt auf dem geschlitzten Loch auf. Die Kordel wird durch das geschlitzte Loch und die angrenzende Bohrung jeweils um 90°, d.h. insgesamt um 180° umgelenkt und auf diese Weise gesichert.

WO 01/41236 A1 beschreibt eine Griffanordnung für Batteriekästen mit einem Griffelement, das eine zum Durchführen eines Endstücks einer Kordel ausreichend große Bohrung und eine an die angepasste Bohrung mit angrenzender zur Aufnahme des Endstücks geeigneter Arretierungskammer hat. Die beiden benachbarten Bohrungen sind mit einem zur Durchführung der Kordel geeigneten Schlitz miteinander verbunden. Zum Arretieren der Kordel an dem Griffstück wird das Endstück zunächst durch die große Bohrung hindurch gesteckt und die Kordel sodann seitlich in die benachbarte Bohrung verschoben. Anschließend wird die Kordel in der kleineren Bohrung zurückgezogen, bis das Endstück in der Aufnahmekammer sitzt.

DE 88 05 405 U hat eine ähnliche Griffanordnung für Batteriekästen, bei der nur eine zur Durchführung eines Endstücks einer Kordel geeignete Bohrung im Griffelement vorgesehen ist. Benachbart zu dieser Bohrung ist eine Arretierungskammer zur Aufnahme des Endstücks in das Griffelement eingebracht. Zur Sicherung der Kordel am Griffelement wird das Endstück durch die Bohrung hindurch geführt und um 180° gedreht, um in die Arretierungskammer eingeführt zu werden. Durch diese Umlenkung der Kordel soll ein sicherer Sitz der Kordel am Griffelement sichergestellt werden.

DE 103 23 024 B3 offenbart einen Batteriekasten, bei dem die Durchführungsöffnung als ein sich in eine Längsrichtung erstreckendes Langloch ausgebildet ist, durch das eine Schlaufe des Schnurabschnitts des Tragegriffelementes durchführbar ist. An dem Batteriekasten ist unterhalb der Öffnung des Langtochs im Bereich der Langlochenden jeweils ein Klemmverriegelungselement zur Aufnahme des Schnurabschnitts angeordnet. Die Klemmverriegelungselemente haben jeweils eine Einführungsöffnung, die in eine Führungsöffnung für den Schnurabschnitt mündet und gegenüberliegend der Führungsöffnung eine zur Einführung der Schnurabschnitte offene Einführseite und eine Verengung zu verriegelnden Aufnahme des Schnurabschnitts in der angrenzenden Führungsöffnung hat. Die offene Einführseite weist in Längsrichtung parallel zum Langloch gesehen vom Langloch in Richtung des zugeordneten Langlochendes.

Die EP0355 854 A1 offenbart eine Griffanordnung für Batteriekästen, bestehend aus einem Tragegriff mit Trageschnur, die an ihren gegenüberliegenden Seiten mit je wenigstens einer Tragbohrung versehen sind, durch die die Trageschnur, mit einem Klöppel als Verdickung an einem freien Ende versehen, hindurchgeführt ist, der zur Befestigung in einer Aufnahme des Traggriffes, unter Bildung einer während der Ausübung einer Zugkraft auf die Trageschnur, gegen Öffnen gesicherten Tragschlaufe eingelegt ist. Die Aufnahme des Traggriffs besteht aus einer Eintiefung für den Klöppel, deren Längserstreckung mindestens der Länge des Klöppels entspricht und aus einer in Längsrichtung des Traggriffes an diese Eintiefung anschliessende Ausnehmung für die Trageschnur besteht, zwischen denen eine Stützkante für den Klöppel gebildet ist, wobei die Stützkante quer zur Längsrichtung des Traggriffes verlaufend, von deren tiefster Stelle bis zu ihren Enden wenigstens den Durchmesser des Klöppels überschreitend oder zusammen mit wenigstens einer weiteren Stützkante oder Haltekante oder Stützfläche, die Befestigung des Klöppels in der Aufnahme gegen Öffnen sichert.

Durch diese Anordnung kann die Schlaufe des Schnurabschnitts einer ringförmig geschlossenen Batteriekastenschnur mit Griffabschnitt und Schurabschnitt leicht durch das Langloch geführt und durch einfaches Hochziehen verriegelt werden. Beim Hochziehen wird der Schnurabschnitt automatisch durch die Einführöffnung in die angrenzende Führungsöffnung hinein gezogen und durch die Verengung der Einführöffnung in der Führungsöffnung gehalten.

Diese beschriebene Maßnahme erfordert nachteilig eine Modifizierung der Batteriekästen.

Bei der automatischen Montage von Fahrzeugbatterien mit Robotern besteht das Problem, dass dieser an den Batteriekastenschnur durch die Roboterarme gegriffen und an die Einbaupositionen verfahren werden. Hierbei treten Beschleunigungen bis zu 6 G auf.

Ausgehend hiervon ist es Aufgabe der vorliegenden Erfindung, eine verbesserte Griffanordnung für Batteriekästen mit einem Griffelement zu schaffen, die ohne Modifizierung eines Batteriekastens universell einsetzbar ist, schnell und leicht montiert werden kann und zudem stark belastbar ist.

Die Aufgabe wird mit der Griffanordnung der eingangs genannten Art dadurch gelöst, dass angrenzend an die Arretierungskammer ein das Hindurchziehen eines in der Arretierungskammer eingelegten Endstücks verhindernder Schlitz vorgesehen ist, der sich in seiner Längsrichtung von der Arretierungskammer in Richtung Schnurdurchgang erstreckt, dessen Einschnitt quer zur Durchgangsachse des Schnurdurchgangs steht und dessen Einschnittsöffnung zum Einlegen der Schnur ebenfalls quer zur Durchgangsachse des Schnurdurchgangs steht, so dass eine durch den Schnurdurchgang geführte Schnur zum Einlegen in den Schlitz ausgehend vom Schnurdurchgang zweifach umgelegt werden muss und durch den Schlitz in die Arretierungskammer geleitet wird.

Dadurch, dass der Einschnitt des Schlitzes quer zur Durchgangsachse des Schnurdurchgangs steht, wird die vom Schnurdurchgang umgelenkte Schnur durch die obere Schlitzwand gehalten. Die Anordnung verhindert auch, dass bei Zugbelastung das Endstück aus der Arretierungskammer herausgezogen wird. Im Gegenteil wird eine im Wesentlichen in Längsrichtung wirkende Kraft bei Zugbelastung auf die Schnur ausgeübt, die das Endstück an die an den Schlitz angrenzende Wand der Arretierungskammer zieht und dort festliegt. Durch Gestaltung des Schlitzes so, dass die Mittelachse eine dort eingelegte Schnur etwas von der Flucht des Schnurdurchgangs versetzt ist, kann zusätzlich bewirkt werden, dass sich die Schnur bei Belastung weiter in den Schlitz hinein zieht und damit das Endstück in der Arretierungskammer noch sicherer hält.

Entscheidend ist jedenfalls, dass durch die zweifache Umlenkung der Schnur beim Einlegen in den Schlitz und der daraus resultierenden Sicherung des Endstücks in der Arretierungskammer ausschließlich durch konstruktive Gestaltung des Griffelements eine erheblich verbesserte Belastbarkeit erreicht wird, ohne dass konstruktive Maßnahmen an dem Batteriekasten erforderlich sind. Das Endstück mit der daran angebrachten Schnur ist zudem schnell und einfach in das Griffelement einknüpfbar. Hierzu wird das Endstück einfach in die Arretierungskammer geleitet, der daran angrenzende Schnurabschnitt in den Schlitz eingesteckt und die Schnur in den Schnurdurchgang über die seitliche Öffnung des Schnurdurchgangs eingeclipst.

Die Griffanordnung kann einseitig oder beidseitig einknüpfbar sein. Bei der einseitig einknüpfbaren Ausführungsform ist das zweite Ende der Schnur fest mit dem Griffelement beispielsweise durch Verkleben oder Verschweißen verbunden.

Bei der beidseitig einknüpfbaren Ausführungsform hat das Griffelement in seiner Längsachse gegenüberliegend an beiden Enden jeweils einen Schnurdurchgang mit zugeordnetem Schlitz und angrenzender Arretierungskammer, um beide Ende der Schnur in das Griffelement einzuknüpfen.

Zur Verbesserung der Stabilität unter gleichzeitiger Gewichts- und Materialreduzierung ist es vorteilhaft, wenn das Griffelement sich entlang der Längsachse und quer zur Längsachse erstreckende Verstärkungsrippen hat.

Ein mit zwei solchen Griffanordnungen ausgerüsteter Bleiakkumulator mit einem Batteriekasten hat an zwei sich gegenüberliegenden Seitenwänden des Batteriekastens Durchführungslöcher zur Aufnahme der Schnur einer Griffanordnung. Mindestens ein Endstück der Schnur wird dann durch die Durchführungslöcher geführt, um die Schnur mit dem Batteriekasten zu verbinden. Anschließend wird das mindestens eine Endstück, wie oben erläutert, an dem Griffelement festgelegt.

Die Erfindung wird nachfolgend anhand von Ausführungsbeispielen mit den beigefügten Zeichnungen näher erläutert. Es zeigen:
- Figur 1: - Seitenansicht einer ersten einseitig einknüpfbaren Griffanordnung für Batteriekästen;
- Figur 2: - Längsschnitt der Griffanordnung aus Figur 2;
- Figur 3: - Querschnittsansicht der Griffanordnung aus Figur 1 im Bereich des Schnurdurchgangs;
- Figur 4: - Seitenansicht beidseitig einknüpfbaren zweiten Ausführungsform einer Griffanordnung für Batteriekästen;
- Figur 5: - Längsschnitt der Griffanordnung aus Figur 4;
- Figur 6: - Querschnittsansicht der Griffanordnung aus Figur 4 im Bereich des Schnurdurchgangs.

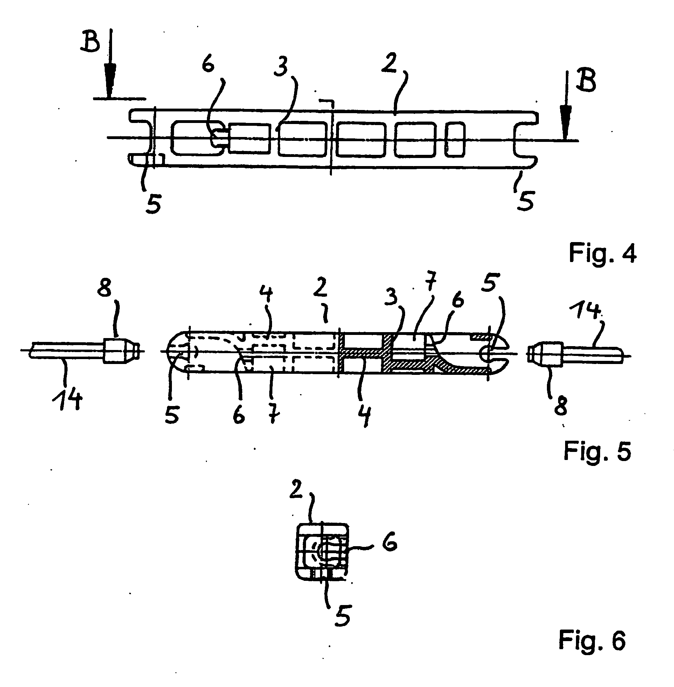

Figur 1 lässt eine Seitenansicht einer ersten Ausführungsform einer Griffanordnung 1 mit einem Griffelement 2 erkennen, das durch sich quer zur Längsachse L erstreckende Verstärkungsrippen 3 hat.

Auf der rechten Seite des Griffelementes 2 ist das Ende einer Schnur 14 fest mit dem Griffelement 2 beispielsweise durch Verkleben oder Verschweißen verbunden. Das andere Ende der Schnur ist mit einem Endstück versehen, dass durch einen Schnurdurchgang 5 an der dargestellten linken Außenkante des Griffelementes geführt, um 90° in Richtung des Betrachters nach vorne und um 90° nach rechts umgelenkt wird. Das derart umgelenkte Schnurende wird durch einen Schlitz 6 in eine Arretierungskammer 7 geführt, um das Endstück in der Arretierungskammer zu halten. Der Schlitz 6 mündet hierfür in der Arretierungskammer. Die Längsrichtung des Schlitzes 6 fluchtet mit der Längsrichtung L des Griffelementes 2. Der Einschnitt des Schlitzes 6 ist, wie aus der Figur 1 erkennbar, quer zur Durchgangsachse D des Schnurdurchgangs 5 ausgerichtet. Auf diese Weise wird ein durch den Schnurdurchgang 5 und den Schlitz 6 geführte Schnur mittels eines in der Arretierungskammer eingelegten Endstückes 7 sicher gehalten und die Griffanordnung 1 ist auch bei erheblicher Beschleunigung eines an der Griffanordnung 1 hängenden Batteriekastens stabil.

Figur 2 lässt eine Schnittansicht der Griffanordnung 1 entlang der Schnittlinie A-A erkennen. Auf der rechten Seite ist deutlich zu erkennen, dass das Schnurende fest in einer Bohrung des Griffelementes 2 eingebaut ist. Weiterhin ist neben den sich quer zu Längsachse L erstreckenden Verstärkungsrippen erkennbar, dass das Griffelement 2 sich entlang der Längsachse L erstreckende Verstärkungsrippen 4 hat.

Im Bereich der Arretierungskammer 7 sind die entlang der Längsachse L sich erstreckenden Verstärkungsrippen 4 von der Mittelachse des Griffelements 2 versetzt angeordnet, um die vertiefte Arretierungskammer 7 zu bilden. Die Größe der Arretierungskammer 7 ist an ein am Ende der Schnur fest angebrachtes Endstück 8 angepasst, um dieses in die Arretierungskammer 7 einlegen zu können.

Aus der Darstellung ist erkennbar, dass die Durchgangsachse D des Schnurdurchgangs 5 im rechten Winkel zum Einschnitt des Schlitzes 6 steht. Beim Ziehen der durch den Schnurdurchgang 5 nach unten geführten Schnur 14 wird das Endstück gegen die an den Schlitzen 6 angrenzende Wand der Arretierungskamer 7 gezogen. Um das Festklemmen der Schnur 14 in den Schlitz 6 weiter zu verstärken, ist der Schlitz 6 von der Flucht des Schnurdurchgangs 5 bzw. der Längsachse L des Griffelementes 2 leicht versetzt angeordnet, wie durch die beiden parallelen Linien in der Arretierungskammer 7 angedeutet ist.

Figur 3 lässt eine Querschnittsansicht im Bereich des Schnurdurchgangs 8 erkennen. Dabei wird wiederum die quer zueinander stehende Anordnung des Schnurdurchgangs 5 und des Schlitzes 6 deutlich. Es ist auch zu erkennen, dass der Schlitz 6 einen zur Öffnungsseite sich verjüngenden Einschnitt und einen an eine Schnur angepassten Kanal hat.

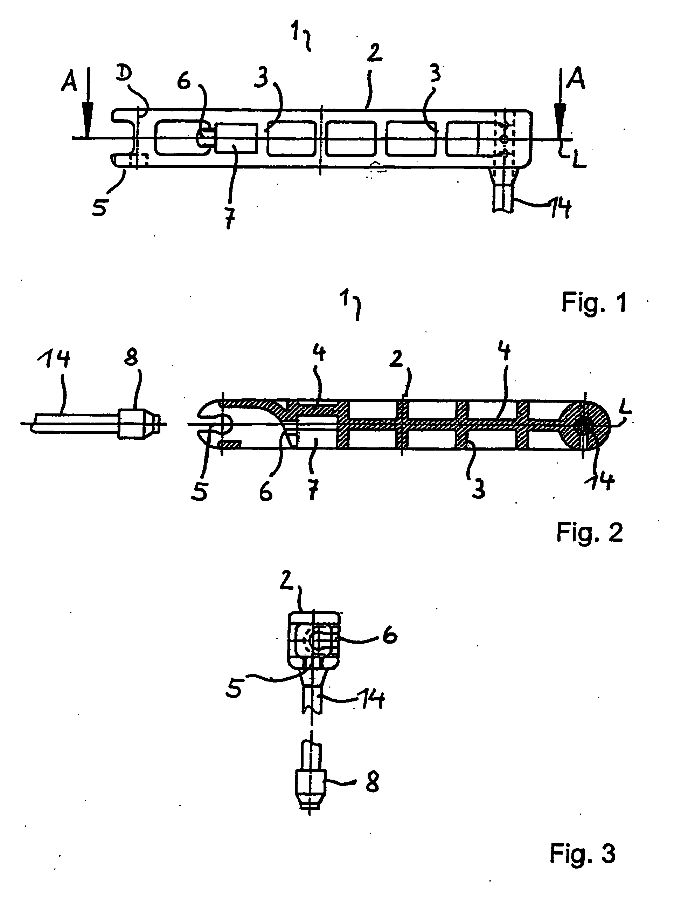

Figur 4 lässt eine Seitenansicht einer zweiten Ausführungsform der Griffanordnung 1 für Batteriekästen erkennen. Bei dieser Ausführungsform sind beide, jeweils mit einem Endstück 8 versehende Enden der Schnur 14 in das Griffelement 2 einknüpfbar. Die an dem rechten und linken Ende des Griffelementes 2 vorgesehenen Befestigungselemente für das jeweilige Endstück 8 und die Schnur 14 bestehend aus Schnurdurchgang 5, Schlitz 6 und Arettierungskammer 7 sind spiegelbildlich zueinander ausgerichtet, so dass in der Darstellung der Figur 4 der Einschnitt des Schlitzes 6 einmal nach vorne und einmal nach hinten weist.

Figur 5 lässt eine Schnittansicht entlang des Schnitts B-B durch das Griffelement 2 der Figur 4 erkennen. Aus der Ansicht wird die spiegelbildliche Anordnung der Halteelemente deutlich. Der weitere Aufbau entspricht dem bereits oben beschriebenen Aufbau für die einseitig einknüpfbare Griffanordnung.

Figur 6 lässt eine Querschnittsansicht durch das Griffelement 2 aus Figuren 4 und 5 erkennen. Auch hier ist die Anordnung von Schnurdurchgang 5 und Schlitz 6 derart zu erkennen, dass die Durchgangsachse des Schnurdurchgangs 5 im rechten Winkel zum Einschnitt des Schlitzes 6 steht.

## Patentansprüche

1. Griffanordnung (1) für Batteriekästen mit einem Griffelement (2), das mit mindestens einem Ende einer am Batteriekasten befestigbaren Schnur (14) so verbindbar ist, dass ein mit einem Endstück (8) versehenes Ende der Schnur (14) durch einen mit einem verjüngten Abschnitt versehenen, seitlich offenen und mit seiner Durchgangsachse (D) quer zur Längsachse (L) des Griffelementes (2) ausgerichteten Schnurdurchgangs (5) im Griffelement (2) geführt und das Endstück (8) in einer Arretierungskammer (7) gehalten wird, **dadurch gekennzeichnet, dass** angrenzend an die Arretierungskammer (7) ein das Hindurchziehen eines in der Arretierungskammer (7) eingelegten Endstücks (8) verhindernder länglicher Schlitz (6), der durch einen mit einem entlang seiner Längsrichtung einseitig geöffneten Einschnitt gebildet ist, vorgesehen ist, der sich in seiner Längsrichtung von der Arretierungskammer (7) in Richtung des Schnurdurchgangs (5) erstreckt und dessen Einschnitt quer zur Durchgangsachse (D) des Schnurdurchgangs (5) steht und dessen Eintrittsöffnung zum Einlegen der Schnur ebenfalls quer zur Durchgangsachse (D) des Schnurdurchgangs (5) steht so dass eine durch den Schnurdurchgang (5) geführte Schnur (14) zum Einlegen in den Schlitz (6) ausgehend vom Schnurdurchgang (5) zweifach umgelenkt werden muss und durch den Schlitz (6) in die Arretierungskammer (7) geleitet wird.

2. Griffanordnung (1) nach Anspruch 1, **dadurch gekennzeichnet, dass** ein zweites Ende der Schnur (14) fest mit dem Griffelement (2) verbunden ist.

3. Griffanordnung (1) nach Anspruch 2, **dadurch gekennzeichnet, dass** das zweite Ende der Schnur (14) mit dem Griffelement (2) verklebt oder verschweißt ist.

4. Griffanordnung (1) nach Anspruch 1, **dadurch gekennzeichnet, dass** das Griffelement (2) in Richtung der Längsachse (L) gegenüberliegend an beiden Enden jeweils einen Schnurdurchgang (5) mit zugeordnetem Schlitz (6) und angrenzender Arretierungskammer (7) hat, um beide Enden der Schnur (14) in das Griffelement (2) einzuknüpfen.

5. Griffanordnung (1) nach einem der vorhergehenden Ansprüche, **dadurch gekennzeichnet, dass** das Griffelement (2) entlang der Längsachse (L) und quer zur Längsachse (L) erstreckende Verstärkungsrippen (4, 3) hat.

6. Bleiakkumulator mit einem Batteriekasten und mit zwei Griffanordnungen (1) nach einem der vorhergehenden Ansprüche, **dadurch gekennzeichnet, dass** der Batteriekasten an zwei sich gegenübeniegenden Seitenwänden Durchführungslöcher zur Aufnahme der Schnur (14) einer Griffanordnung (1) hat.

## Claims

1. A grip arrangement (1) for battery boxes having a grip element (2) which can be connected to at least one end of a cord (14) which can be attached to the battery box, in such a way that an end of the cord (14) provided with an endpiece (8) is guided through a laterally open cord passage (5) in the grip element (2), said cord passage (5) being provided with a tapered section and being oriented with ist passage axis (D) transversely with respect to the longitudinal axis (L) of the grip element (2), and in such a way that the endpiece (8) is held in a locking chamber (7), **characterized in that**, adjacent to the locking chamber (7), an elongate slot (6) which prevents an endpiece (8) which has been inserted into the locking chamber (7) from being pulled through is provided, which elongate slot (6) is formed by an indent opened on one side along its longitudinal direction and extends in its longitudinal direction from the locking chamber (7) in the direction of the cord passage (5), and the indent of said slot (6) runs transversely with respect to the passage axis (D) of the cord passage (5) and its indent opening for the insertion of the cord also runs transversely with respect to the passage axis of the cord passage, with the result that a cord (14) which is guided through the cord passage (5) has to be deflected twice starting from the cord passage (5) in order to be inserted into the slot (6), and said cord (4) is directed into the locking chamber (7) through the slot.

2. The grip arrangement (1) as claimed in claim 1, **characterized in that** a second end of the cord (14) is securely connected to the grip element (2).

3. The grip arrangement (1) as claimed in claim 2, **characterized in that** the second end of the cord (14) is bonded or welded to the grip element (2).

4. The grip arrangement (1) as claimed in claim 1, **characterized in that** the grip element (2) has a cord passage (5) with an assigned slot (6) and an adjacent locking chamber (7) at each of its two opposite ends in the direction of the longitudinal axis (L) in order to clamp the two ends of the cord (14) into the grip element (2).

5. The grip arrangement (1) as claimed in one of the preceding claims, **characterized in that** the grip element (2) has reinforcement ribs (4, 3) extending along the longitudinal axis (L) and transversely with respect to the longitudinal axis (L).

6. A lead storage battery having a battery box and having two grip arrangements (1) as claimed in one of the preceding claims, **characterized in that** the battery box has, on two side walls lying opposite one another, guide holes for receiving the cord (14) of a grip arrangement.

## Revendications

1. Dispositif de poignée (1) pour un boîtier de batterie comportant un élément de préhension (2) relié par au moins une extrémité à un cordon (14) fixé au boîtier de batterie de façon que l'extrémité du cordon (14) munie de l'embout (8) puisse être guidée par un passage de cordon (5) de l'élément de préhension (2) ayant un segment rétréci, latéralement ouvert et aligné par son axe traversant (D) transversalement à l'axe longitudinal (L) de l'élément de préhension (2), et retenant l'embout (8) dans une chambre de blocage (7),
dispositif **caractérisé en ce que**
de manière adjacente à la chambre de blocage (7), une fente allongée (6) interdisant le passage de l'embout (8) placé dans la chambre de blocage (7), fente formée par une encoche ouverte d'un côté, suivant sa direction longitudinale, cette encoche s'étendant selon sa direction longitudinale à partir de la chambre de blocage (7) en direction du passage de cordon (5) et dont l'encoche est dirigée transversalement à l'axe traversant (D) du passage de cordon (5), et dont l'orifice d'entrée pour recevoir le cordon, est également transversal à l'axe traversant (D) du passage de cordon (5) de façon qu'un cordon (14) guidé à travers le passage de cordon (5) pour être placé dans la fente (6) à partir du passage de cordon (5), soit dévié deux fois et soit guidé par la fente (6) jusque dans la chambre de blocage (7).

2. Dispositif de poignée (1) selon la revendication 1,
**caractérisé en ce qu'**
une seconde extrémité du cordon (14) est reliée solidairement à l'élément de préhension (2).

3. Dispositif de poignée (1) selon la revendication 2,
**caractérisé en ce que**
la seconde extrémité du cordon (14) est collée ou soudée à l'élément de préhension (2).

4. Dispositif de poignée (1) selon la revendication 1,
**caractérisé en ce que**
l'élément de préhension (2) présente dans la direction de l'axe longitudinal (L), de façon opposée aux deux extrémités, un passage de cordon (5) respectif avec une encoche (6) et une chambre de blocage (7) adjacente pour combiner les deux extrémités du cordon (14) dans l'élément de préhension (2).

5. Dispositif de poignée (1) selon l'une des revendications précédentes,
**caractérisé en ce que**
l'élément de préhension (2) a des nervures de renforcement (4, 3) s'étendant le long de l'axe longitudinal (L) et transversalement à l'axe longitudinal (L).

6. Accumulateur au plomb comportant un boîtier de batterie et deux dispositifs de poignée (1) selon l'une des revendications précédentes,
**caractérisé en ce que**
sur deux parois latérales opposées, le boîtier de batterie comporte les orifices traversants pour recevoir le cordon (14) d'un dispositif de poignée (1).
